## Europäisches Patentamt
## European Patent Office
## Office européen des brevets

(19)

(11) Veröffentlichungsnummer: **0 064 648**
**B2**

(12) # NEUE EUROPÄISCHE PATENTSCHRIFT

(45) Veröffentlichungstag der neuen Patentschrift:
25.01.89

(21) Anmeldenummer: **82103484.0**

(22) Anmeldetag: **24.04.82**

(51) Int. Cl.⁴: **C 08 L 69/00,** C 08 L 67/02 //
(C08L69/00, 51:00)

---

(54) **Thermoplastische Formmassen aus Polycarbonat, Polyalkylenterephthalat und Pfropfpolymerisat.**

---

(30) Priorität: **09.05.81 DE 3118526**

(43) Veröffentlichungstag der Anmeldung:
**17.11.82 Patentblatt 82/46**

(45) Bekanntmachung des Hinweises auf die Patenterteilung:
**05.03.86 Patentblatt 86/10**

(45) Bekanntmachung des Hinweises auf die Entscheidung über den Einspruch:
**25.01.89 Patentblatt 89/4**

(84) Benannte Vertragsstaaten:
**DE FR GB IT NL SE**

(56) Entgegenhaltungen:
**EP-A-0 022 216**
**EP-A-0 025 920**
**DE-A-2 348 377**
**DE-A-2 726 256**
**DE-B-2 343 609**
**US-A-3 655 824**
**US-A-4 257 937**

**Ullman's Enzyklopädie der technischen Chemie 4. Aufl. Band 19 S. 280-283 (1980)**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Neuray, Dieter, Dr., Sebastian- Kneipp- Weg 6, D-4150 Krefeld (DE)**
Erfinder: **Nouvertné, Werner, Dr., Scheiblerstrasse 95, D-4150 Krefeld 1 (DE)**
Erfinder: **Binsack, Rudolf, Dr., Bethelstrasse 4a, D-4150 Krefeld 1 (DE)**
Erfinder: **Rempel, Dieter, Dr., Max- Beckmann- Strasse 35, D-5090 Leverkusen 1 (DE)**
Erfinder: **Müller, Peter Rolf, Dr., Paul- Klee- Strasse 76, D-5090 Leverkusen 1 (DE)**

EP 0 064 648 B2

**Beschreibung**

Die Erfindung betrifft thermoplastische Formmassen aus aromatischem Polycarbonat, Polyalkylenterephthalat und ausgewählten Pfropfpolymerisaten.

Thermoplastische Formmassen auf Basis von Polycarbonat, Polyalkylenterephthalat und gegebenenfalls Pfropfpolymerisat sind bekannt; vgl. z. B. DE-A-2 622 414 (= US-A-4 044 073), DE-B-1 187 793 (= US-A-3 218 372), DE-B-2 343 609 (= US-A-3 864 428), EP-A-0 020 605 und 0 025 920.

Obwohl die genannten Formmassen viele positive Eigenschaften besitzen, werden sie manchen speziellen Anforderungen nicht gerecht. So wird die Schlagzähigkeit bei mehraxialer Belastung, die z. B. für schlagbeanspruchte Gehäuseteile sehr wichtig ist, nicht immer allen Anforderungen gerecht.

Es war daher Aufgabe der Erfindung, Formmassen auf Basis von Polycarbonat und Polyalkylenterephthalat bereitzustellen, die sich für diese Zwecke besser eignen, die bekannt guten physikalischen und chemishen Eigenschaften von Polycarbonat/Polyalkylenterephthalat-Mischungen aber weitgehend behalten.

Überraschenderweise wurde nun gefunden, daß Polycarbonat/Polyalkylenterephthalat-Mischungen, denen ein ausgewähltes Pfropfpolymerisat zugesetzt worden ist, eine hohe mehraxiale Schlagzähigkeit aufweisen.

Gegenstand der Erfindung sind thermoplastische Formmassen aus:

A. 1 bis 98 Gew.-Teilen, vorzugsweise 20 bis 79, insbesondere 30 bis 60, Gew.-Teilen, Polyalkylenterephthalat

B. 1 bis 98 Gew.-Teilen vorzugweise 20 bis 79, insbesondere 40 bis 70, Gew.-Teilen, aromatisches Polycarbonat, das frei von o.o.o',o'-Tetramethylbisphenolresten ist, und

C. 1 bis 30 Gew.-Teilen, vorzugsweise 1 bis 20, insbesondere 3 bis 12, Gew.-Teilen, Pfropfpolymerisat aus

    a) 80 bis 98 Gew.-%, vorzugsweise 85 bis 97, Gew.-%, bezogen auf das Pfropfpolymerisat, Acrylatkautschuk mit einer Glasübergangstemperatur unter -20°C als Pfropfgrundlage und

    b) 2 bis 20 Gew.-%, vorzugsweise 3 bis 15, Gew.-%, bezogen auf das Pfropfpolymerisat, mindestens eines polymerisierbaren ethylenisch ungesättigten Monomeren, dessen bzw. deren in Abwesenheit von (a) entstandene Homo- bzw. Copolymerisate eine Glasübergangstemperatur über 25° C hätten, als Pfropfmonomere

wobei sich die Komponenten A, B und C auf 100 Gew.-Teile ergänzen und wobei Komponente C eine Glasübergangstemperatur von unter -20 °C aufweist,

dadurch gekennzeichnet, daß das Monomere (b) auf den vollständig gebrochenen und in Wasser aufgeschlämmten Latex von (a) in Abwesenheit von Suspendiermitteln aufgepfropft wird.

Polyalkylenterephthalate A im Sinne der Erfindung sind Reaktionsprodukte aus aromatischen Dicarbonsäuren oder ihren reaktionsfähigen Derivaten (z. B. Dimethylestern oder Anhydriden) und aliphatischen, cycloaliphatischen oder araliphatischen Diolen und Mischungen dieser Reaktionsprodukte.

Bevorzugte Polyalkylenterephthalate A lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Carl Hanser Verlag, München 1973).

Bevorzugte Polyalkylenterephthalate A enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate A können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie z. B. Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate A können neben Ethylen- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten, z. B. Reste von Propandiol-1,3, 2-Ethylpropandiol-1,3, Neopentylglykol, Pentandiol-1,5, Hexandiol-1,6, Cyclohexan-dimethanol-1,4, 3-Methylpentandiol-2,4, 2-Methylpentandiol-2,4,2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3,-tetramethyl-cyclobutan, 2,2-Bis-(3-β-hydroxyethoxyphenyl)-propan und 2,2-Bis-(4-hydroxypropoxyphenyl)-propan (DE-A-2 407 674, 2 407 776, 2 715 932).

Die Polyalkylenterephthalate A können durch Einbau relativ kleiner Mengen 3- oder 4-wertiger Alkohole oder 3- oder 4-basischer Carbonsäuren, wie sie z. B. in der DE-A-1 900 370 und der US-A-3 692 744 beschrieben sind, verzweigt werden. Beispiele bevorzugter Verzweigungsmittel sind Trimesinsäure, Trimellithsäure, Trimethylolethan und -propan und Pentaerythrit.

Es ist ratsam, nicht mehr als 1 Mol-% des Verzweigungsmittels, bezogen auf die Säurekomponente, zu verwenden.

Besonders bevorzugt sind Polyalkylenterephthalate A, die allein aus Terephthalsäure und deren reaktionsfähigen Derivaten (z. B. deren Dialkylestern) und Ethylenglykol und/oder Butandiol-1,4 hergestellt worden sind, und Mischungen dieser Polyalkylenterephthalate.

Bevorzugte Polyalkylenterephthalate A sind auch Copolyester, die aus mindestens zwei der obengenannten

# EP 0 064 648 B2

Säurekomponenten und/oder aus mindestens zwei der obengenannten Alkoholkomponenten hergestellt sind; besonders bevorzugte Copolyester sind Poly-(ethylenglykol/butandiol-1,4)-terephthalate.

Die als Komponente A vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1 : 1 Gew.-Teile) bei 25°C.

Unter aromatischen Polycarbonaten B im Sinne dieser Erfindung werden Homopolycarbonate, Copolycarbonate und Mischungen dieser Polycarbonate verstanden, denen z. B. mindestens eines der folgenden Diphenole zugrunde liegt:

Hydrochinon,
Resorcin,
Dihydroxydiphenyle,
Bis-(hydroxyphenyl)-alkane,
Bix-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone,
$\alpha,\alpha$-Bis-(hydroxyphenyl)-diisopropylbenzole

sowie deren kernalkylierte und kernhalogenierte Derivate. Diese und weitere geeignete Diphenole sindz. B. in den US-A-3 028 365, 3 275 601, 3 148 172, 3 062 781, 2 991 273, 3 271 367, 2 999 835, 2 970 131 und 2 999 846, in den DE-A-1 570 703, 2 063 050, 2 063 052, 2 211 956, 2 211 957, der FR-A-1 561 518 und in der Monographie von H. Schnell, "Chemistry and Physics of Polycarbonates", Interscience Publischers, New York, 1964, beschrieben.

Bevorzugte Diphenole sind z. B.
4,4'-Dihydroxydiphenyl,
2,4-Bis(4-hydroxyphenyl)-2-methylbutan,
$\alpha,\alpha'$-Bis-(4-hydroxyphenyl)-p-diisopropylbenzol,
2,2-Bis-(3-methyl-4-hydroxyphenyl)-propan und
2,2-Bis-(3-chlor-4-hydroxyphenyl)-propan.

Besonders bevorzugte Diphenole sind z. B.
2,2-Bis-(4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-cyclohexan,
o,o,o',o'-Tetramethylbisphenol-Polycarbonate, die nicht Bestandteil der aromatischen Polycarbonate B sein sollen, sind z. B.
Bis-(3,5-dimethyl-4-hydroxyphenyle),
Bis-(3,5-dimethyl-4-hydroxyphenyl)-alkane,
Bis-(3,5-dimethyl-4-hydroxyphenyl)-cycloalkane,
Bis-(3,5-dimethyl-4-hydroxyphenyl)-sulfide,
Bis-(3,5-dimethyl-4-hydroxyphenyl)-ether,
Bis-(3,5-dimethyl-4-hydroxyphenyl)-ketone,
Bis-(3,5-dimethyl-4-hydroxyphenyl)-sulfoxide,
$\alpha,\alpha'$-Bis-(3,5-dimethyl-4-hydroxyphenyl)-diisopropylbenzole
sowie deren kernhalogenierte Derivate, insbesondere
Bis-(3,5-dimethyl-4-hydroxyphenyl)-methan,
2,2-Bis-(3,5-dimethyl-4-hydroxyphenyl)-propan,
2,4-Bis-(3,5-dimethyl-4-hydroxyphenyl)-2-methylbutan,
1,1-Bis-(3,5-dimethyl-4-hydroxyphenyl)-cyclohexan,
$\alpha,\alpha'$-Bis-(3,5-dimethyl-4-hydroxyphenyl)-p-diisopropylbenzol,
Bis-(3,5-dimethyl-4-hydroxyphenyl)-sulfon.

Die aromatischen Polycarbonate B können durch den Einbau geringer Mengen, vorzugsweise von 0,05 bis 2,0 Mol-% (bezogen auf eingesetzte Diphenole), drei- oder mehr als dreifunktionelle Verbindungen, beispielsweise solcher mit drei oder mehr als drei phenolischen Hydroxygruppen, verzweigt sein.

Die aromatischen Polycarbonate B sollen in der Regel mittlere Molekulargewichte $\bar{M}_w$ von 10 000 bis über 200 000, vorzugsweise von 20 000 bis 80 000 haben, ermittelt durch Messungen der relativen Viskosität in Dichlormethan bei 25°C und einer Konzentration von 0,5 Gew.-%.

Den hochmolekularen Polycarbonaten mit $\bar{M}_w$ von 10 000 bis 200 000 können auch kleine Anteile niedermolekularer Polycarbonate, z. B. mit einem mittleren Polykondensationsgrad von 2 bis 20, zugemischt sein.

Zur Einstellung des Molekulargewichts $\bar{M}_w$ der Polycarbonate B werden in bekannter Weise Kettenabbrecher, wie beispielsweise Phenol, Halogenphenole oder Alkylphenole, in den berechneten Mengen eingesetzt.

Die Polymerisate C umfassen Pfropfcopolymerisate mit kautschukelastichen Eingenschaften.

3

EP 0 064 648 B2

Zusammensetzungen der Pfropfpolymerisate C werden - bis auf die Abwesenheit des Suspendiermittels - z. B. in der DE-B-2 444 584 ($\hat{=}$ US-A-4 022 748) und in der DE-A-2 726 256 ($\hat{=}$ US-A-4 096 202) beschrieben.

Die vorteilhaften Pfropfpolymerisate erhält man, wenn man Monomer (b) auf den vollständig gebrochenen und in Wasser aufgeschlämmten Latex von (a) in Abwesenheit von Suspendiermittel aufpropft. Das anfallende pulverförmige Pfropfpolymerisat kann anschließend getrocknet und im gewünschten Verhältnis unter Einwirkung von Scherkräften mit den anderen Komponenten so homogenisiert werden, daß die mittlere Teilchengröße $d_{50}$ von C in der erfindungsgemäßen Mischung 0,05 bis 3, vorzugsweise 0,1 bis 2, insbesondere 0,2 bis 1 μm beträgt.

Der Begriff "in Abwesenheit von Suspendiermittel" bedeutet die Abwesenheit von Stoffen, die nach Art und Menge die Pfropfmonomeren (b) in der wäßrigen Phase suspendieren könnten. Diese Definition schließt die Anwesenheit von Stoffen nicht aus, die z. B. bei der Herstellung einer gepfropften Pfropfgrundlage (a) suspendierend gewirkt haben; in derartigen Fällen muß das Koagulations- oder Fällungsmittel, das zum Brechen des Latex (a) eingesetzt wird, in einer Menge zugesetzt werden, die die suspendierende Wirkung der in der Vorstufe eingesetzten Stoffe kompensiert; mit anderen Worten: Es muß darauf geachtet werden, daß die Pfropfmonomeren (b) in der wäßrigen Phase keine (stabile) Emulsion ergeben.

Ein derart in Abwesenheit von Suspendiermittel hergestelltes Pfropfpolymerisat C ist als Bestandteil der erfindungsgemäßen Formmassen in der anderen Harzkomponente zu einer außengewöhnlich niedrigen Teilchengröße verteilbar, die relativ unverändert auch längere Verarbeitungszeiten bei höherer Temperatur übersteht.

Der Begriff "außergewöhnlich niedrige Teilchengröße" meint, daß Anzahl, Form und Größe der einzusetzenden Pfropfpolymerisatteilchen mit Anzahl, Form und Größe der in die geschmolzenen anderen Harzkomponenten eingebrachten Pfropfpolymerisatteilchen auch nach dem Homogenisieren im wesentlichen noch übereinstimmen.

Die Acrylatkautschuke (a) der Polymerisate C sind vorzugsweise Polymerisate aus Acrylsäurealkylestern, gegebenenfalls mit bis zu 40 Gew.-% anderer polymerisierbarer ethylenisch ungesättigter Monomerer. Sofern die als Pfropfgrundlage (a) eingesetzten Acrylatkautschuke - wie auf Seite 15 beschrieben - ihrerseits bereits Pfropfprodukte mit einem Dienkautschukkern sind, wird zur Berechnung dieser Prozentangabe der Dienkautschukkern nicht mitgezählt. Zu den bevorzugten polymerisierbaren Acrylsäureestern gehören $C_1$-$C_3$-Alkylester, beispielsweise Methyl-, Ethyl-, Butyl-, Octyl- und 2-Ethylhexylester; Halogenalkylester, vorzugsweise Halogen-$C_1$-$C_3$-alkylester, wie Chlorethylacrylat, und aromatische Ester wie Benzylacrylat und Phenethylacrylat. Sie können einzeln oder in Mischung eingesetzt werden.

Die Acrylatkautschuke (a) können unvernetzt oder vernetzt, vorzugsweise partiell vernetzt, sein.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z. B. Ethylenglykoldimethacrylat, Allylmethacrylat; mehrfach ungesättigte heterocyclische Verbindungen, wie z. B. Trivinyl- und Triallylcyanurat und -isocyanurat, Trisacryloyl-s-triazine, insbesondere Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2, Gew.-%, bezogen auf Pfropfgrundlage (a).

Bei cyclischen vernetzenden Monomeren mit mindestens 3 ethylenisch ungesättigten Gruppen ist es vorteilhaft, die Menge auf < 1 Gew.-% der Pfropfgrundlage (a) zu beschränken.

Bevorzugte "andere" polymerisierbare ethylenisch ungesättigte Monomere, die neben den Acrylsäureestern gegebenenfalls zur Herstellung der Pfropfgrundlage (a) dienen können, sind z. B. Acrylnitril, Styrol, α-Methylstyrol, Acrylamide, Vinyl-$C_1$-$C_6$-alkylether. Bevorzugte Acrylatkautschuke als Pfropfgrundlage (a) sind Emulsionspolymerisate, die einen Gelgehalt von $\geqslant$ 60 Gew.-% aufweisen.

Der Gelgehalt der Pfropfgrundlage (a) wird bei 25°C in Dimethylformamid bestimmt (M. Hoffmann, H. Krömer, R. Kuhn, Polymeranalytik I und II, Georg Thieme Verlag, Stuttgart 1977).

Acrylatkautschuke als Pfropfgrundlage (a) können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten.

Der Anteil des Polydien-Kerns in der Pfropfgrundlage (a) kann 0,1 bis 80, bevorzugt 10 bis 50 Gew.-%, bezogen auf (a), betragen. Schale und Kern können unabhängig voneinander unvernetzt, teilvernetzt oder hochvernetzt sein.

Besonders bevorzugte Pfropfgrundlagen (a) für Pfropfpolymerisate C auf Basis von Polyacrylsäureestern seien nachfolgend noch einmal zusammengefaßt:

1.    Acrylsäureesterpolymerisate und -copolymerisate ohne Dienkautschukkern und
2.    Acrylsäureesterpolymerisate und -copolymerisate, die einen Dienkautschukkern enthalten.

4

Die Pfropfausbeute, d. h. der Quotient aus der Menge des aufgepfropften Monomeren (b) und der Menge des eingesetzten Pfropfmonomeren (b), beträgt in der Regel 20 bis 80 Gew.-%. Die Bestimmung kann wie bei M. Hoffman, H. Krömer, R. Kuhn, Polymeranalytik, Bd. 1, Georg Thieme Verlag, Stuttgart 1977, beschrieben, erfolgen.

Bevorzugte Pfropfmonomere (b) sind α-Methylstyrol, Styrol, Acrylnitril, Methylmethacrylat oder Mischungen dieser Monomeren. Bevorzugte Pfropfmonomer-Mischungen sind solche aus Styrol und Acrylnitril im Gew.-Verhältnis 90 : 10 bis 50 : 50.

Als Pfropfgrundlage (a) können auch solche Acrylatkautschuke verwendet werden, die als wäßrige Emulsion (Latex) anfallen und deren Latexpartikel 1 bis 20 Gew.-%, vorzugsweise 1 bis 10 Gew.-%, bezogen auf (a), bereits in wäßriger Emulsion aufgepfropfte Monomere enthalten, deren Homo- bzw. Copolymerisate Glastemperaturen > 0°C aufweisen würden.

Bevorzugte derartige aufgepfropfte Monomere sind Alkylacrylate, Alkylmethacrylate, Styrol, Acrylnitril, α-Methylstyrol und/oder Vinylacetat.

Derartige Pfropfgrundlagen (a) werden z. B. durch Emulsionspolymerisation oder Emulsionspfropfpolymerisation hergestellt. Man kann sie aber auch so herstellen, daß man einen Acrylatkautschuk in Lösung oder Masse herstellt, dann die Pfropfmonomeren aufpfropft und anschließend diese Kautschuke in eine wäßrige Emulsion, die sich für weitere Pfropfverfahren eignet, überführt.

Als Pfropfgrundlage (a) für Acrylatkautschuke dieser besonderen Ausführungsform eignen sich also vorzugsweise neben den auf Seite 15 aufgezählten Polymerisaten auch in wäßriger Emulsion hergestellte Pfropfpolymerisate aus Acrylsäureesterpolymerisaten oder -copolymerisaten, die gegebenenfalls einen Dienkautschukkern enthalten, und ethylenisch ungesättigten polymerisierbaren Monomeren.

Die erfindungsgemäßen Formmassen können zur Erhöhung der Benzinfestigkeit bis zu 5 Gew.-Teile Ethylenhomo- bzw. -copolymerisat enthalten. Ethylencopolymerisate in diesem Sinne sind Polyethylene, deren Reste neben Ethylenresten bis zu 30 Gew.-%, bezogen auf Ethylencopolymerisat, aus Resten anderer copolymerisierbarer Monomerer bestehen. Andere copolymerisierbare Monomere für die Herstellung dieser Ethylencopolymerisate sind z. B. die oben für die Herstellung von Pfropfgrundlage und Pfropfauflage für Polymerisat C aufgezählten Monomeren.

Die erfindungsgemäßen Polyester-Formmassen können übliche Additive, wie Gleit- und Entformungsmittel, Nukleiermittel, Stabilisatoren, Füll- und Verstärkungsstofe, Flammschutzmittel sowie Farbstoffe enthalten.

Die gefüllten bzw. verstärkten Formmassen können bis zu 60 Gew.-%, bezogen auf die verstärke Formmasse, Füll- und Verstärkungsstoffe enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die mit Flammschutzmitteln ausgerüsteten Polyester-Formmassen enthalten Flammschutzmittel in einer Konzentration von im allgemeinen weniger als 30 Gew.-%, bezogen auf die flammgeschützten Formmassen.

Es kommen alle bekannten Flammschutzmittel in Frage, wie z. B. Polyhalogendiphenyl, Polyhalogendiphenylether, Polyhalogenphthalsäure und ihre Derivate und Polyhalogenoligo- und -polycarbonate, wobei die entsprechenden Bromverbindungen besonders wirksam sind. Außerdem enthalten sie in der Regel einen Synergisten, wie z. B. Antimontrioxid.

Die Herstellung der Formmassen kann in den üblichen Mischaggregaten, wie Walzen, Knetern, Ein- und Mehrwellenextrudern, erfolgen.

Die in den nachfolgenden Beispielen genannten Teile sind Gewichtsteile; Prozentangaben beziehen sich auf das Gewicht.

## Beispiele

Verwendete Komponenten:

I. Polycarbonat aus Bisphenol-A, Phenol und Phosgen, relative Viskosität 1,285, gemessen in Dichlormethan bei 25°C in 0,5-%-iger Lösung.

II. Polybutylenterephthalat mit einer Intrinsic-Viskosität von 1,18 dl/g, gemessen in Phenol/o-Dichlorbenzol (Gew.-Verhältnis 1 : 1) bei 25°C im Ubbelohde-Viskosimeter.

III. Pfropfpolymerisat mit Kern-Mantel-Struktur, hergestellt nach dem folgenden mehrstufigen Verfahren:

### 1. Herstellung der Pfropfgrundlage

1.1 Herstellung eines Polybutadienlatex. In einem Reaktor wird unter Rühren eine Emulsion folgender Zusammensetzung bei 65°C bis zum vollständigen Monomerumsatz innerhalb von ca. 22 Stunden polymerisiert:

| 100 | Teile Butadien, |
|---|---|
| 1,8 | Teile Na-Salz der disproportionierten Abietinsäure, |
| 0,257 | Teile Natriumhydroxid, |
| 0,3 | Teile n-Dodecylmercaptan, |
| 1,029 | Teile Na-Ethylendiamintetraacetat, |
| 0,023 | Teile Kaliumpersultat und |
| 176 | Teile Wasser. |

Es wird ein Latex erhalten, der Polybutadienteilchen eines mittleren Durchmessers ($d_{50}$) von 0,1 µm in einer Konzentration von ca. 36 % enthält.

1.2 Herstellung von Acrylatkautschuk, der Polydienkerne enthält.
In einem Reaktor wird unter Rühren bei 63° C folgende Mischung vorgelegt:

| 200 | Teile Latex 1.1, |
|---|---|
| 5 000 | Teile Wasser, |
| 14 | Teile Kaliumpersulfat, |
| 0,9124 | Teile Triallylcyanurat und |
| 399,09 | Teile n-Butylacrylat. |

Innerhalb von 5 Stunden werden bei 63° C folgende Mischungen in den Reaktor getrennt eindosiert:
Mischung 1:

| 90 | Teile $C_{14}$-$C_{18}$-Alkylsulfonat-Na und |
|---|---|
| 11 900 | Teile Wasser. |

Mischung 2:

| 23,09 | Teile Triallylcyanurat und |
|---|---|
| 10 101 | Teile n-Butylacrylat. |

Anschließend läßt man 2 Stunden bei 65° C auspolymerisieren. Die gebildeten Polymerisate besitzen Gelgehalte von 85 - 95 % und mittlere Teilchendurchmesser ($d_{50}$) von 0,5 µm (Polymerisat-Gehalt im Latex: 38 %).

2. Herstellung der Emulsionspfropfpolymerisate

2.1 Emulsionsprfropfpolymerisat aus 90 % Acrylatkautschuk 1.2 und 10 % Styrol + Acrylnitril.

In einem Reaktor werden vorgelegt:

| 3 296 | Teile Latex 1.2, |
|---|---|
| 1,5 | Teile Kaliumpersulfat und |
| 90 | Teile Wasser. |

Bei 65° C werden folgende Mischungen getrennt in den Reaktor eindosiert:
Mischung 1:

| 39 | Teile Acrylnitril und |
|---|---|
| 100 | Teile Styrol, |

Mischung 2:

| 150 | Teile Wasser und |
|---|---|
| 4 | Teile $C_{14}$-$C_{18}$-Alkylsulfonat-Na. |

Anschließend läßt man 4 Stunden bei 65° C auspolymerisieren (Polymerisat-Gehalt im Latex: 37,8 %).

2.2 Herstellung des Pfropfpolymerisates C aus dem Emulsionspfropfpolymerisat.
In einem Reaktor werden bei 70° C vorgelegt:

| 18 800 | Teile Wasser und |
|---|---|
| 240 | Teile Bittersalz. |

Unter Rühren läßt man nun innerhalb von 2 Stunden 11 200 Teile Latex 2.1 in den Reaktor einlaufen.
Nach Beendigung des Zulaufes wird 1 Teil Kaliumpersulfat in den Reaktor gegeben: anschließend werden 148 Teile Acrylnitril und 381 Teile Styrol in 1 Stunde gleichmäßig unter Rühren eindosiert. Anschließend rührt man die Aufschlämmung 1 Stunde bei 90° C. Dann wird das Polymerisat C isoliert.

Herstellung der Formmassen:
Auf einem Zweiwellenextruder wurden die Komponenten unter Stickstoffatmosphäre aufgeschmolzen (Gew.-Teile s. nachfolgende Tabelle) und homogenisiert. Die Zylindertemperatur wurde so gewählt, daß die in der Tabelle angegebene Massetemperatur gewährleistet war. Die Formtemperatur betrug 60° C. Der Schmelzstrang der erfindungsgemäßen Mischungen wurde vor dem Austritt aus der Düse entgast, in Wasser abgekühlt, granuliert und getrocknet. Die Verarbeitung erfolgte auf einer Spritzgußmaschine.

| I | II | III | EKWA+ /W.s/ |
|---|---|---|---|
| 50 | 42,5 | 7,5 | 111 |

+ mehraxiale Schlagzähigkeit im EKWA (Elektronische Kraft/Weg-Aufnahme)-Test nach DIN 53443, Blatt 2, Durchschlagung einer Platte von 3 x 60 x 60 mm mit einem Gewicht von 35 kg mit einem Durchstoßdorn mit kugelförmiger Spitze, Durchmesser 20 mm, bei einer Fallhöhe von 1 m. Die Zahl der Zähbrücke betrug in allen Beispielen 100 %.

**Patentansprüche**

1. Thermoplastische Formmassen aus
A. 1 bis 98 Gew.-Teilen Polyalkylenterephthalat.
B. 1 bis 98 Gew.-Teilen aromatisches Polycarbonat, das frei von o.o.o'.o'-Tetramethylbisphenolresten ist, und
C. 1 bis 30 Gew.-Teilen Pfropfpolymerisat aus
    a) 80 - 98 Gew.-%, bezogen auf das Pfropfpolymerisat, Acrylatkautschuk mit einer Glasübergangstemperatur unter -20° C als Pfropfgrundlage und
    b) 2 bis 20 Gew.-%, bezogen auf das Pfropfpolymerisat, mindestens eines polymerisierbaren ethylenisch ungesättigten Monomeren, dessen bzw. deren in Abwesenheit von (a) entstandenen Homo- bzw. Copolymerisate eine Glasübergangstemperatur über 25° C hätten, als Pfropfmonomere
wobei sich die Komponenten A, B und C auf 100 Gew.-Teile ergänzen, und wobei Komponente C eine Glasübergangstemperatur von unter -20° C aufweist,
dadurch gekennzeichnet, daß das Monomere (b) auf den vollständig gebrochenen und in Wasser aufgeschlämmten Latex von (a) in Abwesenheit von Suspendiermitteln aufgepfropft wird.
2. Formmassen nach Anspruch 1, dadurch gekennzeichnet, daß sie
20 bis 79 Gew.-Teile A,
20 bis 79 Gew.-Teile B und
1 bis 20 Gew.-Teile C
enthalten,
wobei sich die Komponenten A, B und C auf 100 Gew.-Teile ergänzen.
3. Formmassen nach Ansprüchen 1 und 2, dadurch gekennzeichnet, daß sie glasfaserverstärkt sind.
4. Formmassen nach Ansprüchen 1 - 3, dadurch gekennzeichnet, daß das Polyalkylenterephthalat A Polyethylenterephthalat und/oder Polybutylenterephthalat ist.
5. Formmassen nach Ansprüchen 1 - 4, dadurch gekennzeichnet, daß das aromatische Polycarbonat B Bisphenol-A-Polycarbonat ist.

**Claims**

1. Thermoplastic moulding compositions of
A. 1 to 98 parts by weight of polyalkylene terephthalate,
B. 1 to 98 parts by weight of an aromatic polycarbonate which is free from o,o,o',o'-tetramethylbisphenol radicals, and
C. 1 to 30 parts by weight of a graft polymer of
    a) 80 - 98 % by weight, based on the graft polymer, of an acrylate rubber having a glass transition temperature of below -20° C as the graft base and
    b) 2 to 20 % by weight, based on the graft polymer, of at least one polymerisable ethylenically unsaturated monomer, the homo- or copolymers of which, formed in the absence of (a), would have a glass transition temperature of above 25° C, as the graft monomer,
components A, B and C forming a total of 100 parts by weight, and component C having a glass transition temperature of below -20° C,
characterised in that monomer (b) is grafted on to the completely broken latex, suspended in water, of (a) in the absence of suspending agents.

2. Moulding compositions according to Claim 1, characterised in that they contain
20 to 79 parts by weight of A,
20 to 79 parts by weight of B and
1 to 20 parts by weight of C,
components A, B and C forming a total of 100 parts by weight.

3. Moulding compositions according to Claims 1 and 2, characterised in that they are reinforced with glass fibres.

4. Moulding compositions according to Claims 1 - 3, characterised in that the polyalkylene terephthalate A is polyethylene terephthalate and/or polybutylene terephthalate.

5. Moulding compositions according to Claims 1 - 4, characterised in that the aromatic polycarbonate a is bisphenol A polycarbonate.

## Revendications

1. Mélanges à mouler thermoplastiques formés de:
A. 1 à 98 parties en poids d'un polyalkylènetéréphtalate,
B. 1 à 98 parties en poids d'un polycarbonate aromatique qui est dépourvu de restes o,o,o',o'-tétraméthylbisphénol et
C. 1 à 30 parties en poids d'un polymère greffé formé de:

   a) 88 - 98 % en poids, par rapport au polymère greffé, d'un caoutchouc d'acrylate ayant une température de transition vitreuse inférieure à -20°C comme support de greffage, et

   b) 2 à 20 % en poids, par rapport au polymère greffé, d'au moins un monomère à insaturation éthylénique polymérisable, dont les homopolymères et copolymères formés en l'absence de (a) auraient une température de transition vitreuse supérieure à 25°C, comme monomères à greffer, les composants A, B et C se complétant à 100 parties en poids et le composant C ayant une température de transition vitreuse inférieure à -20°C.

   caractérisés en ce que le monomère (b) est greffé sur le latex entièrement rompu et en suspension dans l'eau de (a) en l'absence d'agent de mise en suspension.

2. Mélanges à mouler suivant la revendication 1, caractérisés en ce qu'ils contiennent
20 à 79 parties en poids de A,
20 à 79 parties en poids de B et
1 à 20 parties en poids de C,
les composants A, B et C se complétant à 100 parties en poids.

3. Mélanges a mouler suivant les revendications 1 et 2, caractérisés en ce qu'ils sont renforcés par de la fibre de verre.

4. Mélanges à mouler suivant les revendications 1 à 3, caractérisés en ce que le polyalkylènetéréphtalate A est un polyéthylènetéréphtalate et/ou un polybutylènetéréphtalate.

5. Mélanges à mouler suivant les revendications 1 à 4, caractérisés en ce que le polycarbonate aromatique B est un polycarbonate de bisphénol A.